# EUROPÄISCHE PATENTANMELDUNG

(11) **EP 4 686 677 A1**
(43) Veröffentlichungstag der Anmeldung: **04.02.2026**
(21) Anmeldenummer: 25193366.9
(22) Anmeldetag: 01.08.2025
(51) Int. Cl.: B65G 47/84, B65G 47/86, B08B 9/42, B67C 3/22, B65G 54/02

(54) **VORRICHTUNG ZUM BEHANDELN EINES BEHÄLTERS IN EINER ABFÜLLANLAGE**

(30) Priorität: 01.08.2024 DE 102024121892
(71) Anmelder: KRONES AG, 93073 Neutraubling (DE)
(72) Erfinder: Neubauer, Michael, 93073 Neutraubling (DE)
(74) Vertreter: Nordmeyer, Philipp Werner

(57) **Zusammenfassung**

Die vorliegende Erfindung betrifft eine Vorrichtung (1) zum Behandeln eines Behälters (6) in einer Abfüllanlage, beispielsweise Getränkeabfüllanlage, umfassend eine Mehrzahl von um eine zentrale Drehachse (2) drehbaren Auslegern (10), die jeweils ein Behandlungsteil (30) zum Bereitstellen zumindest einer auf den Behälter (6) ausübbaren Behandlung, beispielsweise umfassend eine Werkzeugaufnahme und/oder eine Haltevorrichtung zum Halten eines Behälters (6), umfassen, wobei mindestens ein Behandlungsteil (30) mit zumindest einem Freiheitsgrad gegenüber seinem Ausleger (10) an seinem Ausleger (10) angeordnet ist.

## Beschreibung

### Technisches Gebiet

Die vorliegende Erfindung betrifft eine Vorrichtung zum Behandeln eines Behälters in einer Abfüllanlage, beispielsweise in einer Getränkeabfüllanlage.

### Stand der Technik

Im Bereich von Abfüllanlagen, insbesondere Getränkabfüllanlagen, ist es bekannt, die Behandlungen des Behälters auf einzelne Vorrichtungen aufzuteilen, und die Behandlungsvorrichtungen entlang eines Transportpfades nacheinander anzuordnen. Oftmals sind die Behandlungsvorrichtungen in Rundläuferbauweise aufgebaut. Die Behandlung umfasst zunächst den Transport von Behältern durch jede der Behandlungsvorrichtungen, sie kann sich zumindest bei einigen Behandlungsvorrichtungen auf den Transport beschränken. Bei letzterem spricht man auch von "Transversternen". Die Behandlung kann darüber hinaus beispielsweise ein Säubern, ein Befüllen oder ein Verschließen eines Behälters umfassen.

Bei Behandlungsvorrichtungen in Rundläuferbauweise sind die Behandlungseinheiten, welche die Behälter bearbeiten, typischerweise starr auf einer rotierenden Transporteinheit montiert. Diese starre Anordnung verhindert eine flexible Anpassung des Abstands oder der Teilung zwischen den Behandlungseinheiten. Dementsprechend ist die Produktion mit diesen Systemen nur in begrenztem Umfang flexibel.

Zur Erhöhung der Flexibilität in diesem Zusammenhang wurden Behandlungsvorrichtungen erdacht, bei welchen die Transportelemente des Rundläufers unabhängig voneinander entlang ihrer Transportbahn bewegbar sind. Anders ausgedrückt ist es bei derartigen Behandlungsvorrichtungen möglich, innerhalb der durch die benachbarten Transportelemente vorgegebenen Grenzen ein dazwischen vorgesehenes Transportelement zumindest teilweise unabhängig von den vorgenannten benachbarten Transportelementen zu bewegen. Eine derartige Rundläufer-Behandlungsanlage ist aus der DE 10 2017 101 331 A1 bekannt.

### Darstellung der Erfindung

Ausgehend von dem bekannten Stand der Technik ist es eine Aufgabe der vorliegenden Erfindung, eine verbesserte Vorrichtung zum Behandeln eines Behälters in einer Abfüllanlage, beispielsweise einer Getränkeabfüllanlage bereitzustellen.

Die Aufgabe wird durch eine Vorrichtung zum Behandeln eines Behälters in einer Abfüllanlage, beispielsweise einer Getränkeabfüllanlage mit den Merkmalen des Anspruchs 1 gelöst. Vorteilhafte Weiterbildungen ergeben sich aus den Unteransprüchen, der Beschreibung und den Figuren.

Entsprechend wird eine Vorrichtung zum Behandeln eines Behälters in einer Abfüllanlage, beispielsweise einer Getränkeabfüllanlage, vorgeschlagen umfassend eine Mehrzahl von um eine zentrale Drehachse drehbaren Auslegern, die jeweils ein Behandlungsteil zum Bereitstellen zumindest einer auf den Behälter ausübbaren Behandlung, beispielsweise umfassend eine Werkzeugaufnahme und/oder eine Haltevorrichtung zum Halten eines Behälters, umfassen.

Mindestens ein Behandlungsteil ist mit zumindest einem Freiheitsgrad gegenüber seinem Ausleger an seinem Ausleger angeordnet.

Dadurch kann die Vorrichtung präziser auf den jeweiligen Anwendungsfall angepasst werden. Zudem kann die Vorrichtung in Anwendungsfällen eingesetzt werden, bei welchen herkömmliche Vorrichtungen aus dem Stand der Technik aufgrund des Fehlens des zusätzlichen Freiheitsgrades nicht eingesetzt werden konnten. Beispielsweise konnte ein starr am Behandlungsteil angeordnetes Werkzeug, beispielsweise ein Schieber oder Greifarm, nicht zwischen zugeförderte Behälter greifen. Der zusätzliche Freiheitsgrad erlaubt weiterhin die Reduzierung der Größe der die Vorrichtung umfassenden Anlage.

Der Einsatzbereich der vorgeschlagenen Vorrichtung lässt sich gegenüber herkömmlichen Vorrichtungen mithin beträchtlich erweitern. Der zusätzliche Freiheitsgrad kann gemäß einer Ausführungsform eine Schwenkbewegung von einem Behandlungsteil, spezifischer einem Werkzeug, das alleine oder in Zusammenspiel mit einem Werkzeug eines benachbarten Auslegers einen Behälter greift, sein. Diese zusätzliche Schwenkbewegung kann beispielsweise durch eine ortsfeste Führungskurve, beispielsweise ausgebildet als Kurvenscheibe, und eine darauf laufende Führungsrolle, die mit dem Behandlungsteil gekoppelt ist, erzeugt werden. Die Führungsrolle kann wiederum über einen Hebel an dem zu bewegenden Behandlungsteil angebracht sein. Entsprechend kann eine Winkelstellung des Behandlungsteils weitgehend frei gewählt werden.

Die Vorrichtung, umfassend den zusätzlichen Freiheitsgrad für ihr Behandlungsteil, kann eingesetzt werden, wenn auf einem Transportband in unregelmäßigen Abständen Behälter gefördert werden und diese Behälter von der Vorrichtung, genauer vom Transportband, abgenommen und etwaige Behälter zu einer weiteren Behandlung an eine nachfolgende Vorrichtung übergeben werden sollen. Bei herkömmlichen Vorrichtungen mit starren Behandlungsteilen kann es schwierig sein, in etwaige vorliegende, kleine Lücken zwischen zwei Behältern einzutauchen. Durch das Vorsehen des zusätzlichen Freiheitsgrads des Behandlungsteils kann die Winkelstellung und/oder die radiale Position des Behandlungsteils, spezifischer von dessen Werkzeugspitze, so vorgegeben werden, dass es exakt in den Zwischenraum zwischen zwei Behältern eintauchen kann.

Neben der oben geschilderten Schwenkbewegung, die vorteilhafterweise um die Hochachse, also parallel zur zentralen Drehachse erfolgt, sind auch noch andere zumindest einen Freiheitsgrad realisierende Bewegungen denkbar, beispielsweise eine kurvengesteuerte Translationsbewegung in radialer Richtung. Auf diese Weise kann zum Beispiel ein Bolzen oder Greifer des Behandlungsteils aus- und eingefahren werden.

Bevorzugt kann jedes zweite Behandlungsteil mit zumindest einem Freiheitsgrad gegenüber seinem Ausleger an seinem Ausleger angeordnet sein und das jeweils andere Behandlungsteil starr an seinem Ausleger angeordnet sein.

Durch diese Anordnung wird eine maschinenbaulich einfache Vorrichtung erreicht, denn jedes Paar von Auslegern weist so nun ein Behandlungsteil mit einem zusätzlichen Freiheitsgrad auf und ein Herkömmliches. Dadurch wird eine hohe Flexibilität erreicht, aber nur die Hälfte der Ausleger muss mit einem Behandlungsteil mit zusätzlichem Freiheitsgrad ausgestattet werden.

In einer weiteren bevorzugten Ausgestaltung ist jedes Behandlungsteil mit zumindest einem Freiheitsgrad gegenüber seinem Ausleger an seinem Ausleger angeordnet. Auf diese Weise wird eine vollständig flexible Anordnung bereitgestellt, bei welcher der Behandlungsteil um einen weiteren Freiheitsgrad unabhängig von der Bewegung der jeweiligen Ausleger betrieben werden kann.

Gemäß einer Ausführungsform kann ein konzentrisch zu der zentralen Drehachse angeordneter Linearstator vorgesehen sein. Hierbei kann jeder Ausleger mit einem auf dem Linearstator angeordneten Antriebsschlitten verbunden sein, so dass jeder Ausleger individuell durch Bewegung seines Antriebsschlittens auf dem Linearstator um die zentrale Drehachse gedreht werden kann. Da die Elemente des Linearstators in an sich bekannter Weise individuell angesteuert, beziehungsweise bestromt werden können, kann die Steuerung jedes Antriebsschlittens in einfacher Weise unabhängig von den anderen Antriebsschlitten erfolgen.

Die genannte Ausführungsform mit der Verwendung eines kreisförmigen Linearstators und darauf fahrenden Antriebsschlitten ermöglicht eine individuelle Ansteuerung jedes einzelnen Auslegers. Die einzelnen Antriebsschlitten haben aber eine endliche Ausdehnung in der Umfangsrichtung, welche dazu führt, dass ein Mindestabstand zwischen den Auslegern nicht unterschritten werden kann. Entsprechend kann es insbesondere in dieser sehr vorteilhaften Ausführungsform, in der ein effizientes und individuelles Ansteuern der Ausleger stattfinden kann, dazu kommen, dass in einer herkömmlichen Ausgestaltung die äußeren Enden der Ausleger für die jeweilige Anwendung zu weit voneinander beabstandet sind. Durch den vorliegend vorgeschlagenen zusätzlichen Freiheitsgrad kann diese Einschränkung überwunden werden und eine flexibel einsetzbare Vorrichtung bereitgestellt werden.

Gemäß einer Ausführungsform kann der Behandlungsteil schwenkbar am Ausleger angeordnet sein, optional zumindest um eine Schwenkachse, optional um zwei oder drei Schwenkachsen, die beispielsweise orthogonal zueinander angeordnet sein können. Ferner optional kann eine Schwenkachse des Behandlungsteils horizontal und/oder in Bezug auf die Drehachse tangential zur Umfangsrichtung orientiert sein. Alternativ oder zusätzlich kann eine Schwenkachse des Behandlungsteils vertikal und/oder parallel zur Drehachse orientiert sein.

Gemäß einer Ausführungsform kann der Behandlungsteil verschiebbar am Ausleger angeordnet sein, beispielsweise zumindest in einer, optional zwei oder drei Verschieberichtungen, die beispielsweise optional orthogonal zueinander angeordnet sein können. Ferner optional kann eine Verschieberichtung des Behandlungsteils radial zur Drehachse und/oder eine Verschieberichtung parallel zur Drehachse orientiert sein und/oder der Behandlungsteil entlang einer Kurvenbahn verschiebbar sein.

Der Behandlungsteil kann auch verschiebbar und schwenkbar am Ausleger angeordnet sein.

Gemäß einer Ausführungsform kann zumindest eine Bewegung via zumindest einem Freiheitsgrad des Behandlungsteils zumindest teilweise unabhängig von einer Steuerung der Bewegung des Auslegers, typischerweise unabhängig von einer Steuerung der Bewegung des Schlittenteils, um die zentrale Drehachse steuerbar ausgebildet sein.

Gemäß einer Ausführungsform kann die Bewegung des Behandlungsteils via zumindest einem Freiheitsgrad des Behandlungsteils zumindest teilweise unabhängig kurvengesteuert ausgebildet sein. Beispielsweise kann eine Führungsrolle oder ein Führungsschlitten mit dem Behandlungsteil gekoppelt sein. Die Führungsrolle beziehungsweise der Führungsschlitten können zumindest über einen vorgegebenen Winkelabschnitt bezogen auf die Umfangsrichtung der Drehachse mit einer Führungskurve gekoppelt sein. So kann beispielsweise die Position des Behandlungsteils bezogen auf seinen Freiheitsgrad in Hinblick auf eine Winkelposition des Auslegers exakt vorgegeben werden.

Gemäß einer Ausführungsform kann die zumindest eine Bewegung des Behandlungsteils derart steuerbar sein, dass bei einer Bewegung des Auslegers (typischerweise des Antriebsschlittens) in Umfangsrichtung über einen vorgegebenen Winkelabschnitt ein Behandlungsabschnitt, beispielsweise ein Interaktionsabschnitt, des Behandlungsteils in Bezug auf die Umfangsrichtung im Wesentlichen an gleicher Stelle gehalten werden kann. Mit anderen Worten kann die Vorrichtung derart ausgebildet sein, dass die Umfangsgeschwindigkeit des Behandlungsabschnitts des Behandlungsteils zumindest kurzzeitig im Wesentlichen komplett gestoppt werden kann. Dadurch kann eine spezielle Behandlung des Behälters erfolgen, beispielsweise eine besonders schonende Übernahme oder Übergabe eines Behälters oder eine besonders präzise anderweitige Behandlung.

Gemäß einer Ausführungsform kann der Behandlungsteil zumindest einen Greifarm und/oder eine Greifvorrichtung zum Greifen eines Behälters umfassen. Dadurch kann beispielsweise ein Fördern eines Behälters, etwa durch Schieben des Behälters oder Greifen und Halten des Behälters, während dessen Förderung durch den Ausleger, realisiert werden. Optional umfasst der zumindest eine Greifarm beziehungsweise die Greifvorrichtung einen Interaktionsabschnitt, mit welchem der Greifarm beziehungsweise die Greifvorrichtung mit dem Behälter zum Greifen in Kontakt tritt, wobei optional der Interaktionsabschnitt beabstandet von einer optional vorgesehenen Schwenkachse des Behandlungsteils angeordnet sein kann.

Gemäß einer Ausführungsform kann jeder Ausleger, typischerweise via seinem Schlittenteil, unabhängig von zumindest einem anderen Ausleger, optional allen anderen Auslegern, entlang des kreisförmigen Linearstators steuerbar ausgebildet sein.

Gemäß einer Ausführungsform kann die Bewegung des Behandlungsteils durch eine unabhängig vom kreisförmigen Linearstator vorgesehene Steuerungseinheit ausgebildet sein, wobei die Steuerungseinheit beispielsweise mechanisch ausgebildet ist und/oder die oben genannte Führungskurve umfasst.

Gemäß einer Ausführungsform kann jeder Ausleger je zumindest einen Auslegerarm umfassen, der sich zumindest zwischen einer in Bezug auf die Drehachse radial innen gelegenen Lagerung und dem radial außerhalb der Lagerung gelegenen Antriebsschlitten erstreckt. Die Ausleger können beispielsweise je zwei Auslegerarme umfassen. Ein erster Auslegerarm kann einen oberen Auslegerarm darstellen, und ein zweiter Auslegerarm kann einen unteren Auslegerarm darstellen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine perspektivische Ansicht einer Vorrichtung zum Behandeln eines Behälters in einer Abfüllanlage;
- Figur 2: schematisch eine Draufsicht auf die Vorrichtung aus Figur 1;
- Figur 3: schematisch eine Detailansicht der Vorrichtung aus Figur 1;
- Figur 4: schematisch eine weitere Ansicht des Details aus Figur 3;
- Figur 5: schematisch eine Draufsicht auf eine Vorrichtung zum Behandeln eines Behälters in einer Abfüllanlage; und
- Figur 6: schematisch eine weitere Draufsicht auf die Vorrichtung aus Figur 5.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

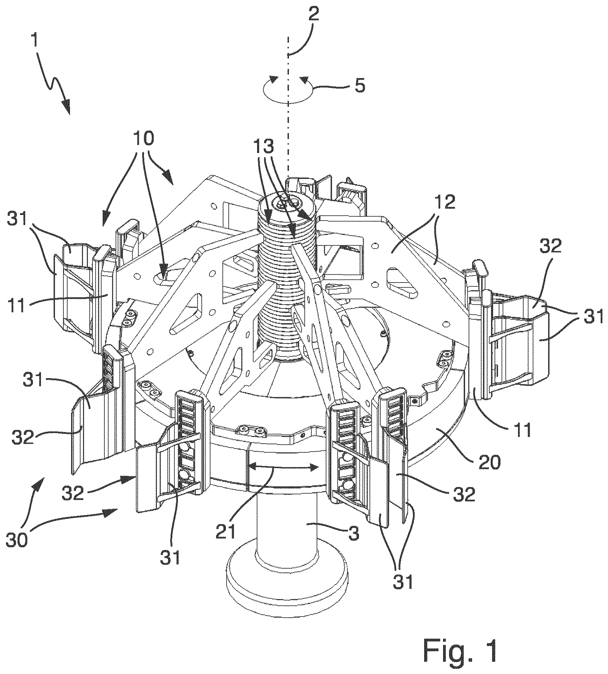

In Figur 1 ist schematisch eine Vorrichtung 1, die ausgebildet und eingerichtet ist zum Behandeln eines Behälters in einer Abfüllanlage, hier spezifischer in einer Getränkeabfüllanlage, gezeigt.

Die Vorrichtung 1 umfasst eine Mehrzahl von um eine zentrale Drehachse 2 drehbaren Auslegern 10, die jeweils ein Behandlungsteil 30 zum Bereitstellen zumindest einer auf den Behälter ausübbaren Behandlung, beispielsweise umfassend eine Werkzeugaufnahme und/oder eine Haltevorrichtung zum Halten eines Behälters, umfassen.

Die Vorrichtung 1 umfasst einen konzentrisch zu der zentralen Drehachse 2 angeordneten, kreisförmigen Linearstator 20. Jeder Ausleger 10 ist mit einem auf dem Linearstator 20 angeordneten Antriebsschlitten 11 verbunden, beziehungsweise anders ausgedrückt umfasst jeder Ausleger 10 einen Antriebsschlitten 11. Dadurch kann jeder Ausleger 10 individuell durch die Bewegung seines Antriebsschlittens 11 auf dem Linearstator 20 um die zentrale Drehachse 2 gedreht werden, wie mittels der via dem Bezugszeichen 21 gekennzeichneten Pfeilen angedeutet. Anders ausgedrückt kann jeder Ausleger 10 via seinem Schlittenteil 11 unabhängig von den anderen Auslegern 10 entlang des kreisförmigen Linearstators 20 bewegt beziehungsweise gesteuert werden.

Die Ausleger 10 umfassen je einen Auslegerarm 12, der sich zwischen einer in Bezug auf die Drehachse 2 radial innen gelegenen Lagerung 13 des Auslegers 10 gegenüber einem drehfesten Grundgestell 3 der Vorrichtung 1 und dem radial außerhalb der Lagerung 13 gelegenen Antriebsschlitten 11 erstreckt. Aufgrund der Lagerung der Ausleger 10 um die zentrale Drehachse 2 weist die Vorrichtung 1 eine Rundläuferbauweise auf.

Jeder Ausleger 10 umfasst ein Behandlungsteil 30. Gemäß dieser Ausführung umfasst jedes Behandlungsteil einen Greifarm 31 zum Greifen eines Behälters (nicht gezeigt). Gemäß dieser Ausführungsform weist jeder Ausleger 10 genau einen Greifarm 31 auf, wobei sich die Greifarme 31 je zweier benachbarter Ausleger 10 mit ihren Interaktionsabschnitten 32, mit welchem jeder Greifarm 31 mit dem Behälter zum Greifen in Kontakt tritt, zugewandt sind. Diese beiden Ausleger 10 bilden ein Paar von Auslegern, die zusammen als Haltevorrichtung zum Halten eines Behälters zusammenwirken können.

Durch ein Bewegen der Ausleger 10 und damit der Greifarme 31 eines Paares von Auslegern 31 aufeinander zu kann ein Behälter gegriffen werden. Die Haltevorrichtung wird also geschlossen. Durch ein Bewegen der Ausleger 10 und damit der Greifarme 31 des Paares von Auslegern 31 voneinander weg kann der Behälter losgelassen werden, die Haltevorrichtung also geöffnet werden.

Die Vorrichtung 1 umfasst eine Förderrichtung 5, in deren Richtung die Behälter von einer Behälteraufnahme bis zu einer Behälterabgabe (beides nicht gezeigt) durch die Vorrichtung 1 gefördert werden.

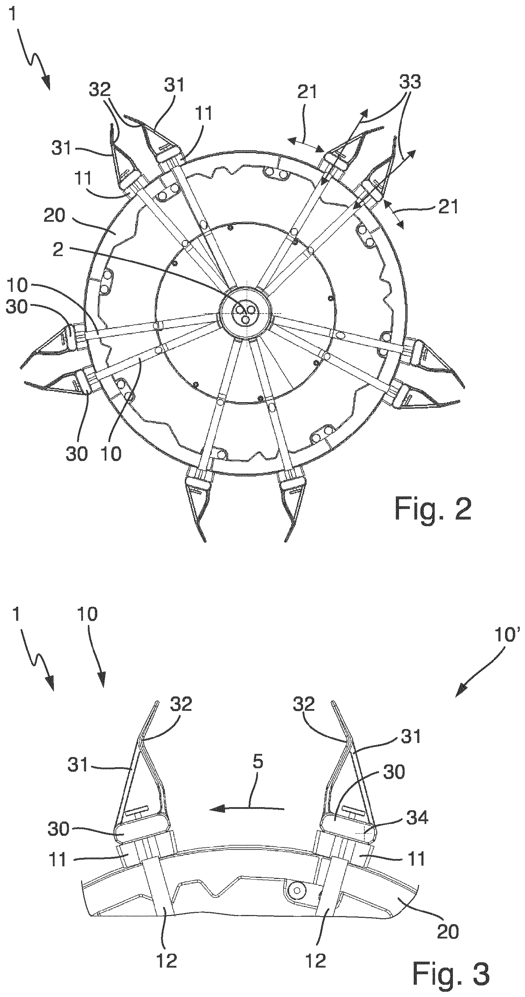

Wie zu den Figuren 2 bis 4 näher erläutert, ist der Behandlungsteil 30 jedes Auslegers 10 mit zumindest einem Freiheitsgrad gegenüber dem Ausleger 10 am Ausleger 10 angeordnet.

Die Behandlungsteile 30 einiger oder aller Ausleger 10 können optional bezogen auf die zentrale Drehachse 2 relativ zum Ausleger 10, spezifischer zum Antriebsschlitten 11, radial verschiebbar ausgebildet sein, wie in Figur 2, die schematisch eine Draufsicht auf die Vorrichtung 1 aus Figur 1 zeigt, zu entnehmen, in welcher eine radiale Bewegungsrichtung 33 der Behandlungsteile 30 exemplarisch für zwei der Ausleger 10 angedeutet ist.

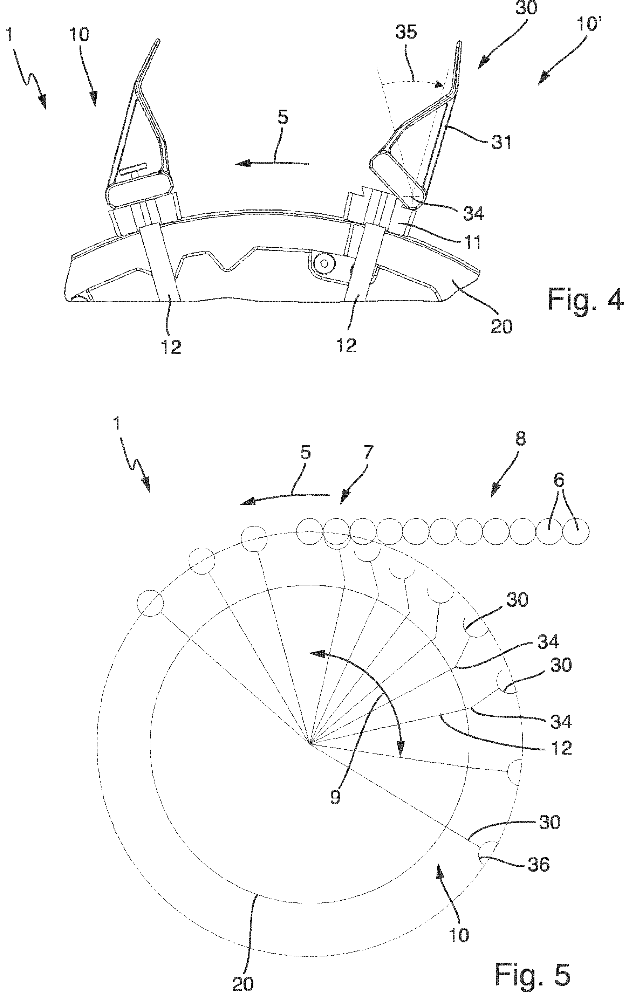

Alternativ oder zusätzlich können zumindest einige der Behandlungsteile 30 an ihrem zugehörigen Ausleger 10 schwenkbar angeordnet sein, wie dies schematisch in den Details eines Paares von Auslegern 10 zeigenden Figuren 3 und 4 dargestellt ist.

Gemäß dieser Ausführungsform ist optional bezogen auf ein Paar von Auslegern, die zusammen ein Halten beziehungsweise Greifen eines Behälters durchführen, der Behandlungsteil 30 des in Förderrichtung 5 hinteren Auslegers, der in den Figuren 3 und 4 mit dem Bezugszeichen "10'" gekennzeichnet ist, um eine parallel zur zentralen Drehachse 2 orientierten, also hier vertikal orientierten Schwenkachse 34 schwenkbar an seinem Ausleger 10 angeordnet. Alternativ können auch die Behandlungsteile 10 aller Ausleger 10 schwenkbar ausgebildet sein. Vorteilhafterweise kann der Behandlungsteil 10 des in Förderrichtung 5 betrachtet vorgelagerten Auslegers 10 (in den Figuren 3 und 4 der linke dargestellte) der Paare von Auslegern gegengleich zum Behandlungsteil 10 des hinteren Auslegers 10' schwenkend ausgebildet sein.

In Figur 3 ist der Behandlungsteil 30 des Auslegers 10' in einer "Nullstellung" gezeigt, in welcher er keine Auslenkung aus einer Grundposition oder anders ausgedrückt Nullstellung aufweist. In Figur 4 ist der Behandlungsteil 30 des Auslegers 10' in einer ausgeschwenkten Position dargestellt, in welcher er in Bezug auf die Nullstellung um einen vorgegebenen Schwenkwinkel 35 geschwenkt vorliegt.

Figur 5 zeigt schematisch eine Draufsicht auf eine Vorrichtung 1 zum Behandeln von Behältern 6 in einer Abfüllanlage, beispielsweise einer Getränkeabfüllanlage, gemäß einer weiteren Ausführungsform, welche im Wesentlichen jener aus Figur 1 entspricht beziehungsweise analog zu dieser aufgebaut ist. Die Behandlung ist ein Fördern der Behälter 6. Die Behälter 6 werden an einer Behälteraufnahme 7 von einer Behälterzuführung 8 an die Vorrichtung 1 zugeführt.

Um die an den Behandlungsteilen 30 der Ausleger 10 angeordnete Greifvorrichtung 36, spezifischer deren Greifarme, zwischen zwei benachbarte Behälter 6 zu bringen, um einen Behälter 6 an der Behälteraufnahme 7 schonend zu übernehmen, ist der Behandlungsteil 30 um eine parallel zur Drehachse orientierte Schwenkachse 34 schwenkbar am zugehörigen Ausleger 10 angeordnet.

Die Position der Behandlungsteile 30 wird durch eine hier nicht gezeigte Steuerungseinheit zum Steuern der Bewegung und zum Vorgeben der Position des Behandlungsteils 30 vorgegeben.

Der Behälteraufnahme 7 in Förderrichtung 5 vorgelagert erfolgt innerhalb eines vorgegebenen Winkelabschnitts 9 ab einer vorgegebenen Winkelposition, die den Beginn des Winkelabschnitts 9 darstellt, ein Schwenken der Behandlungsteile 10 in Richtung Förderrichtung 5 bis zu einem vorgegebenen maximalen Schwenkwinkel, welchen die Behandlungsteile beispielsweise etwa in der Mitte des Winkelabschnitts 9 erreichen. Anschließend wird dieser Schwenkwinkel gehalten, bis ab einer weiteren vorgegebenen Winkelposition innerhalb des vorgegebenen Winkelabschnitts 9 der Behandlungsteil 30 wieder zurück geschwenkt wird, um das zuvor beschriebene Eingreifen der Greifvorrichtung 36 zwischen die Behälter 6 zu ermöglichen.

Alternativ kann die Schwenkbewegung zu Beginn des Winkelabschnittes 9 beginnen und der Schwenkwinkel ansteigen bis zu dem Zeitpunkt beziehungsweise der Winkelposition, zu dem beziehungsweise zu der das Behandlungsteil 30 annähernd in Kontakt mit dem zu fördernden Behälter 6 kommt. Anschließend kann der Schwenkwinkel wieder reduziert werden.

Zur Förderung des gegriffenen Behälters 6 ist der Behandlungsteil 30 vorliegend wieder in der Nullstellung positioniert.

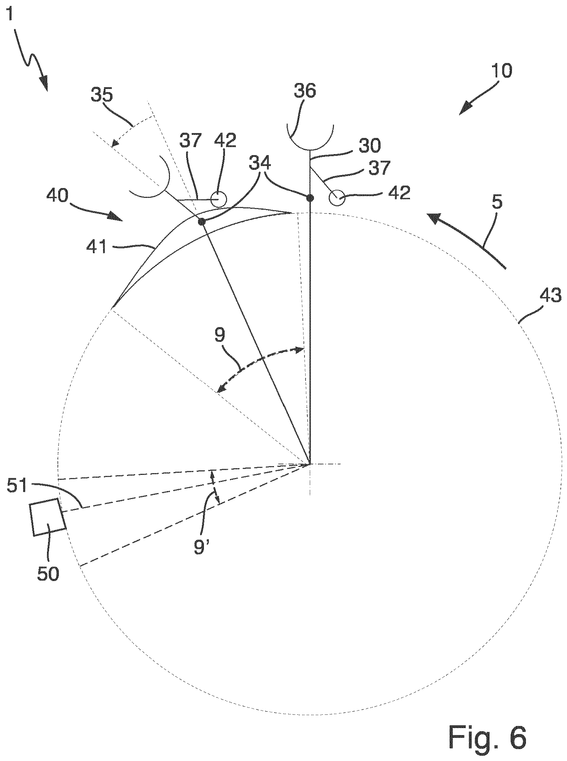

Figur 6 zeigt schematisch eine Draufsicht auf die Vorrichtung 1 gemäß Figur 5, anhand welcher die Steuerung des Schwenkens des Behandlungsteils 30 erläutert wird. Zur besseren Übersichtlichkeit sind hier lediglich zwei Ausleger 10 angedeutet.

Die Vorrichtung 1 umfasst eine Steuerungseinheit 40 zum Steuern der Bewegung der Behandlungsteile 30. Die Steuerungseinheit 40 umfasst eine drehfest am Grundgestell 3 angeordnete Führungskurve 41, die mit einer über einen Hebel 37 am Behandlungsteil 30 angeordneten Führungsrolle 42 in Eingriff bringbar ist. Spezifischer, die Führungsrolle 42 rollt im vorgegebenen Winkelabschnitt 9 über die Führungskurve 41. Da die Führungskurve 41 in Bezug auf einen Teilkreis 43, auf welchem die Führungsrolle 42 keine Auslenkung erfährt, sich nach radial außen erstreckt, wird die Führungsrolle 42 im Winkelabschnitt 9 sukzessive nach radial außen und wieder zurück bewegt. Via dem Hebel 37 erfolgt das Schwenken des Behandlungsteils 10 aus der Nullstellung, wie beim in Figur 6 rechten Ausleger 10 gezeigt, in eine Schwenkrichtung um die Schwenkachse 34 mit einem Schwenkwinkel 35, der durch die Form der Führungskurve 41 vorgegeben ist.

Der Behandlungsteil 30 kann in die Nullstellung vorgespannt sein, beispielsweise via eines Magneten oder eines Federelements (nicht gezeigt). Alternativ oder zusätzlich kann die Führungskurve auch als Scheibe oder Ring ausgebildet sein und die Position des Behandlungsteils 30 stets durch die Führungskurve 41 vorgegeben sein.

Die Steuerungseinheit 40 ist vorliegend mechanisch ausgebildet. Sie kann aber auch zumindest teilweise elektronisch, beispielsweise digital, hydraulisch und/oder pneumatisch ausgebildet sein.

Optional kann die Steuerungseinheit 40 verstellbar ausgeführt sein. Für die Ausführungsform mit einer umlaufenden Führungskurve 41 kann diese zur Durchführung einer Verstellung um die Drehachse 2 rotierbar ausgeführt sein. Somit ist es möglich, den auf den Umfang der Vorrichtung 1 bezogenen Ort, an dem die Führungskurve 41 eine Auswirkung auf den Winkel 35 ausübt, zu verändern. Die Führungskurve 41 wird dann einmal für die Verstellung in die gewünschte Position rotiert und dann wieder festgelegt.

Optional kann die Führungskurve 41 radial verstellbar gelagert sein. Dadurch ist es möglich, den Betrag des Winkels 35, um den das Behandlungsteil 30 schwenkt, zu variieren. Hier wird zur Durchführung der Verstellung der Führungskurve 41 entsprechend eine radiale Verschiebung der Führungskurve 41 vorgenommen und diese dann wieder festgelegt.

Optional kann die Steuerungseinheit 40 derart ausgebildet sein, dass in einem vorgegebenen Winkelabschnitt, der dem Winkelabschnitt 9 entsprechen kann, aber nicht darauf beschränkt ist, zumindest ein Behandlungsabschnitt, beispielsweise der Interaktionsabschnitt 32, des Behandlungsteils 10 in Bezug auf die Umfangsrichtung zur Drehachse 2 im Wesentlichen an gleicher Stelle gehalten werden kann. Mit anderen Worten kann die Umfangsgeschwindigkeit des Behandlungsabschnitts zumindest kurzzeitig im Wesentlichen komplett gestoppt werden.

Bei der vorliegenden Ausführungsform kann dies beispielsweise in einem weiteren Winkelabschnitt 9' erfolgen, in welchem optional eine Behandlungseinheit 50, beispielsweise eine Etikettiereinheit, vorgesehen ist. Zum Aufbringen eines Etiketts wird der durch den Ausleger 10 geförderte Behälter 6 durch Schwenken des Behandlungsteils 30 zuerst in eine Richtung, dann in die andere Richtung bezogen zur Schwenkachse 34 auf gleicher Stelle gehalten. Entsprechend kann der Behälter für eine vorgegebene Zeit, die der Behandlungszeit der Behandlungseinheit 50 entsprechen kann, an einer bestimmen Winkelposition 51 der Behandlungseinheit 50 gehalten werden.

Bei den beschriebenen Vorrichtungen 1 ist die Bewegung des Behandlungsteils 30 zumindest teilweise unabhängig von einer Steuerung der Bewegung des zugehörigen Auslegers 10 steuerbar. Die Steuerung der Bewegung des Auslegers 10 erfolgt via dem Linearstator 20 und dem Antriebsschlitten 11. Die Steuerung der Bewegungen des Behandlungsteils 30 erfolgt über die Steuerungseinheit 40.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Vorrichtung
- 2: Zentrale Drehachse
- 3: Grundgestell
- 5: Förderrichtung
- 6: Behälter
- 7: Behälteraufnahme
- 8: Behälterzuführung
- 9: Vorgegebener Winkelabschnitt
- 10: Ausleger
- 11: Antriebsschlitten
- 12: Auslegerarm
- 13: Lagerung
- 20: Linearstator
- 21: Bewegungen eines Antriebsschlittens
- 30: Behandlungsteil
- 31: Greifarm
- 32: Interaktionsabschnitt
- 33: Bewegungsrichtung
- 34: Schwenkachse
- 35: Schwenkwinkel
- 36: Greifvorrichtung
- 37: Hebel
- 40: Steuerungseinheit
- 41: Führungskurve
- 42: Führungsrolle
- 43: Teilkreis
- 50: Behandlungseinheit
- 51: Winkelposition der Behandlungseinheit

## Patentansprüche

1. Vorrichtung (1) zum Behandeln eines Behälters (6) in einer Abfüllanlage, beispielsweise Getränkeabfüllanlage, umfassend eine Mehrzahl von um eine zentrale Drehachse (2) drehbaren Auslegern (10), die jeweils ein Behandlungsteil (30) zum Bereitstellen zumindest einer auf den Behälter (6) ausübbaren Behandlung, beispielsweise umfassend eine Werkzeugaufnahme und/oder eine Haltevorrichtung zum Halten eines Behälters (6), umfassen,
**dadurch gekennzeichnet, dass**
mindestens ein Behandlungsteil (30) mit zumindest einem Freiheitsgrad gegenüber seinem Ausleger (10) an seinem Ausleger (10) angeordnet ist.

2. Vorrichtung (1) gemäß Anspruch 1, **dadurch gekennzeichnet, dass** jedes zweite Behandlungsteil (30) mit zumindest einem Freiheitsgrad gegenüber seinem Ausleger (10) an seinem Ausleger (10) angeordnet ist und das jeweils andere Behandlungsteil (30) starr an seinem Ausleger (10) angeordnet ist.

3. Vorrichtung (1) gemäß Anspruch 1, **dadurch gekennzeichnet, dass** jedes Behandlungsteil (30) mit zumindest einem Freiheitsgrad gegenüber seinem Ausleger (10) an seinem Ausleger (10) angeordnet ist.

4. Vorrichtung (1) gemäß einem der vorstehenden Ansprüche, **dadurch gekennzeichnet, dass** ein konzentrisch zu der zentralen Drehachse (2) angeordneter Linearstator (20) vorgesehen ist und jeder Ausleger (10) mit einem auf dem Linearstator (20) angeordneten Antriebsschlitten (11) verbunden ist, so dass jeder Ausleger (10) individuell durch Bewegung seines Antriebsschlittens (11) auf dem Linearstator (20) um die zentrale Drehachse (2) gedreht wird.

5. Vorrichtung (1) gemäß einem der vorstehenden Ansprüche, **dadurch gekennzeichnet, dass** der Behandlungsteil (30) schwenkbar am Ausleger (10) angeordnet ist, optional zumindest um eine Schwenkachse (35), optional zwei oder drei optional orthogonal zueinander angeordnete Schwenkachsen (35), wobei optional eine Schwenkachse (35) des Behandlungsteils (30) horizontal und/oder in Bezug auf die Drehachse (2) tangential zur Umfangsrichtung orientiert ist, und/oder eine Schwenkachse (35) des Behandlungsteils (30) vertikal und/oder parallel zur Drehachse (2) orientiert ist.

6. Vorrichtung (1) gemäß einem der vorstehenden Ansprüche, **dadurch gekennzeichnet, dass** der Behandlungsteil (30) verschiebbar am Ausleger (10) angeordnet ist, optional zumindest in einer, optional zwei oder drei optional orthogonal zueinander angeordneten Verschieberichtungen (33), wobei optional eine Verschieberichtung (33) des Behandlungsteils (30) radial zur Drehachse (2) und/oder eine Verschieberichtung (33) parallel zur Drehachse (2) orientiert ist und/oder der Behandlungsteil (30) entlang einer Kurvenbahn verschiebbar ist.

7. Vorrichtung (1) gemäß einem der vorstehenden Ansprüche, **dadurch gekennzeichnet, dass** zumindest eine Bewegung via zumindest einen Freiheitsgrad des Behandlungsteils (30) zumindest teilweise unabhängig von einer Steuerung der Bewegung des Auslegers (10), optional unabhängig von einer Steuerung der Bewegung des Antriebsschlittens (11), steuerbar ist.

8. Vorrichtung (1) gemäß einem der vorstehenden Ansprüche, **dadurch gekennzeichnet, dass** die Bewegung des Behandlungsteils (30) via zumindest eines Freiheitsgrads des Behandlungsteils (30) zumindest teilweise unabhängig kurvengesteuert ausgebildet ist, wobei optional eine Führungsrolle (42) oder ein Führungsschlitten mit dem Behandlungsteil (30) gekoppelt ist, wobei die Führungsrolle (42) oder der Führungsschlitten zumindest über einen vorgegebenen Winkelabschnitt (9) bezogen auf die Umfangsrichtung der Drehachse (2) mit einer Führungskurve (41) gekoppelt ist.

9. Vorrichtung (1) gemäß einer der vorstehenden Ansprüche, **dadurch gekennzeichnet, dass** die zumindest eine Bewegung des Behandlungsteils (30) derart steuerbar ist, dass bei einer Bewegung des Auslegers (10), optional des Antriebsschlittens (11), in Umfangsrichtung über einen vorgegebenen Winkelabschnitt (9) ein Behandlungsabschnitt, beispielsweise ein Interaktionsabschnitt (32), des Behandlungsteils (30) in Bezug auf die Umfangsrichtung im Wesentlichen an gleicher Stelle gehalten werden kann.

10. Vorrichtung (1) gemäß einem der vorstehenden Ansprüche, **dadurch gekennzeichnet, dass** der Behandlungsteil (30) zumindest einen Greifarm (31) und/oder eine Greifvorrichtung (36) zum Greifen eines Behälters (6) umfasst, wobei optional der zumindest eine Greifarm (31) beziehungsweise die Greifvorrichtung (36) einen Interaktionsabschnitt (32) aufweist, mit welchem der Greifarm (31) beziehungsweise die Greifvorrichtung (36) mit dem Behälter (6) zum Greifen in Kontakt tritt, wobei optional der Interaktionsabschnitt (32) beabstandet von einer optional vorgesehenen Schwenkachse (35) des Behandlungsteils (30) angeordnet ist.

11. Vorrichtung (1) gemäß einem der vorstehenden Ansprüche, **dadurch gekennzeichnet, dass** jeder Ausleger (10), optional via seinem Antriebsschlitten (11), unabhängig von zumindest einem anderen Ausleger (10), optional allen anderen Auslegern (10) steuerbar ist, optional entlang des kreisförmigen Linearstators (20) steuerbar sind

12. Vorrichtung (1) gemäß einem der Ansprüche 2 bis 9, **dadurch gekennzeichnet, dass** die Bewegung des Behandlungsteils (30) durch eine unabhängig vom kreisförmigen Linearstator (20) vorgesehene Steuerungseinheit (40) ausgebildet ist, wobei die Steuerungseinheit (40) beispielsweise mechanisch ausgebildet ist und/oder eine Führungskurve (41) umfasst.

13. Vorrichtung (1) gemäß einem der vorstehenden Ansprüche, **dadurch gekennzeichnet, dass** die Ausleger (10) je zumindest einen Auslegerarm (12) umfassen, der sich zumindest zwischen einer in Bezug auf die Drehachse (2) radial innen gelegenen Lagerung (13) und dem radial außerhalb der Lagerung (13) gelegenen Antriebsschlitten (11) erstreckt, wobei die Ausleger (10) beispielsweise je zwei Auslegerarme (12) umfassen.
